# EUROPEAN PATENT SPECIFICATION

(11) **EP 3 614 007 B1**
(45) Date of publication and mention of the grant of the patent: **02.03.2022**
(21) Application number: 18788211.3
(22) Date of filing: 18.04.2018
(51) Int. Cl.: F16D 13/52, F16D 43/206, F16D 7/02, F16D 7/08, F16D 13/56, F16D 43/21

(54) **FRICTION CLUTCH**
REIBUNGSKUPPLUNG
EMBRAYAGE À FRICTION

(30) Priority: 18.04.2017 JP 2017081881
(43) Date of publication of application: 26.02.2020
(73) Proprietor: Ogura Clutch Co., Ltd., Kiryu-shi, Gunma 376-0011 (JP)
(72) Inventor: TAKADA,Takashi, Kiryu-shi Gunma 376-0011 (JP); SAITO,Dai, Kiryu-shi Gunma 376-0011 (JP)
(74) Representative: Zenz Patentanwälte Partnerschaft mbB
(86) International application number: PCT/JP2018/015951
(87) International publication number: WO 2018/194078

(56) References cited:
- EP-A1- 0 854 304
- JP-A- H05 164 154
- JP-A- 2000 055 086
- JP-A- 2000 240 680
- JP-A- 2004 011 764
- JP-A- 2004 011 764
- US-A1- 2009 260 942

## Description

### Technical Field

The present invention relates to a friction clutch having a back torque limiter mechanism that prevents transmission of excessive torque (back torque) from the output side to the input side.

### Background Art

In motorcycle driving, a gear-down operation is sometimes necessary to slow down. The rotational speed of the clutch shaft is increased by a difference between a gear ratio of the gear box before gear change and a gear ratio after gear change. If the clutch is connected at this time, the engine speed increases following the increased rotational speed of the clutch shaft. The torque of the clutch shaft that increases the engine speed is called back torque.

An engine brake tends to be strong at a high engine speed. If the clutch is connected carelessly after a shift-down operation, the engine brake is applied, a phenomenon called a slip or hopping is generated between the drive wheels and the road surface, and the motorcycle body position becomes disturbed and unstable. If a half-clutch is used to slowly connect the clutch, a sudden increase in engine speed can be relaxed and the engine brake can be controlled manually. However, in a situation in which a severe operation is required, as in a race or the like, the half-clutch operation is difficult and puts a burden on the driver. To solve this problem, there is a friction clutch having a mechanism of cutting off the back torque transmitted to the engine at a predetermined value and relaxing the application of the engine brake, that is, a back torque limiter.

A friction clutch of this type is disclosed in, for example, patent literature 1. The friction clutch disclosed in patent literature 1 is a multi-disc friction clutch provided on a power transmission path between the engine and transmission of a motorcycle. This friction clutch includes a back torque limiter mechanism in order to avoid transmission of excessive back torque backward from the transmission side to the crankshaft side.

The back torque limiter mechanism is provided on an output side rotor to which power is transmitted via a plurality of friction discs of the friction clutch. The output side rotor includes a first rotor engaged with a plurality of friction discs, and a second rotor to which power is transmitted from the first rotor via the back torque limiter mechanism. The second rotor is connected to rotate together with the input shaft of the transmission.

The back torque limiter mechanism includes a first ring that rotates together with the first rotor, and a second ring that rotates together with the second rotor. The first ring is detachably fitted in the annular groove of the first rotor and held by the first rotor. The first ring includes a plurality of fixing projections for fixing the first ring to the first rotor, and a plurality of projections for torque transmission that mesh with the second ring. Each fixing projection is fitted in a fixing recess formed at the bottom of the annular groove of the first rotor.

The second ring is detachably fitted in the annular groove of the second rotor and held by the second rotor. The second ring includes a plurality of fixing projections for fixing the second ring to the second rotor, and a plurality of projections for torque transmission that mesh with the first ring. Each fixing projection is fitted in a fixing recess formed at the bottom of the annular groove of the second rotor.

Each of the torque transmission projections provided on the first and second rings has an engaging surface for forward torque transmission and a cam surface for backward torque transmission. When transmitting power from the first rotor to the second rotor, the forward torque transmission engaging surface comes into contact with the forward torque transmission engaging surface of the other ring.

When transmitting torque from the second rotor to the first rotor, the backward torque transmission cam surface comes into contact with the backward torque transmission cam surface of the other ring, the torque transmission projections slide from each other, and the first rotor moves in the axial direction. This movement of the first rotor in the friction clutch decreases the press force of a pressure plate pressing a plurality of friction discs, and reduces the back torque.

However, in the friction clutch disclosed in patent literature 1, the backward torque transmission cam surfaces of the first and second rings are in surface contact, so it is difficult to slide at the contact portion. Poor sliding of the surface contact increases the working resistance of the back torque limiter mechanism and raises a regulation value at which the back torque is cut off. The engine brake tends to be strong at a high regulation value, and the driver needs to perform a half-clutch operation stressfully.

In JP 2004 011764 A, a friction clutch is disclosed which comprises a clutch hub being composed of an output side fixed hub shell, and an input side movable hub shell movable in an axial center direction. A back torque limiter comprises a cam ball, wherein a cam groove is provided between both hub shells. Diametric lock grooves are formed in end surfaces of the hub shells, lock pins are engaged with both lock grooves, and circumferential recesses are extended at diametric outer end parts of the lock grooves. The hub shells are locked to each other by the lock pins when a prescribed rotation speed is not exceeded, and the lock pins move in the recesses when the prescribed rotation speed is exceeded to make both hub shells relatively rotate as a limiter release mechanism.

JP 2000 055086 A discloses a subclutch inner which is energized to the side of a main clutch inner located on a side opposite to a pressure plate, wherein clearance is provided between a right tip part of the subclutch inner and an internal surface of the pressure plate. Therefore, a dimensional error of thickness of outer and inner friction plates does not affect clutch connecting force and back torque set value, and the friction plates always slide out by back torque at the set value. Because an adjusting bolt adjusting clearance of a right tip part of an outer peripheral boss part of the subclutch inner and the pressure plate is provided, the back torque set value can be set with accuracy by adjusting clearance, even when the dimensional error of the friction plates or wear amount is large.

Further, US 2009/260942 A1 discloses a friction clutch that includes a clutch cam which is movable with respect to a clutch hub in a center axis direction of a transmission shaft. The clutch cam has a release rod which penetrates through the clutch hub and is extended toward the pressure plate. An adjustment bolt which is provided at the pressure plate and is configured to restrict a moving range of a clutch cam in the center axis direction is disposed to face an end portion of the release rod which is closer to the pressure plate.

Furthermore, EP 0 854 304 A1 discloses a friction clutch that includes a clutch wheel. The clutch wheel moves in relation to the clutch core, thereby reducing the frictional force of the clutch. The core has at least three lead ramps matching the number of counter ramps on the clutch wheel. The lead ramps each hold a ball in contact with the counter ramp. The ramps and counter ramps each have a pre-set lead angle sloping in relation to the rotary direction of a clutch cage and positioned so that, when braking torque occurs, the clutch wheel moves axially away from the core, and reduces the pressure force of the clutch. The lead ramp and counter ramp are in the form of grooves with semicircular cross-section.

### Related Art Literature

### Patent Literature

Patent Literature 1: Japanese Patent Laid-Open No. 2011-21719

### Disclosure of Invention

### Problem to be Solved by the Invention

The present invention has been made to solve the above-described problems, and has as its object to provide a friction clutch capable of cutting off back torque of a smaller value by reducing the working resistance of a back torque limiter mechanism.

### Means of Solution to the Problem

To achieve the above object, according to the present invention, there is provided a friction clutch comprising an input member that receives power from a power source and rotates, a first rotor configured to move in a clutch working direction parallel to a rotation axis of the input member, a friction clutch mechanism interposed between the input member and the first rotor, a second rotor that rotates together with an output member, and a back torque limiter mechanism interposed between the first rotor and the second rotor, the friction clutch mechanism including a friction member including a first friction disc and a second friction disc that are provided on the input member and the first rotor, respectively, and move in the clutch working direction to come into contact with each other and move apart from each other, a first pressure plate that presses the friction member in a direction in which the first friction disc and the second friction disc come close to each other, and a second pressure plate that sandwiches the friction member with the first pressure plate, the back torque limiter mechanism including a driving side cam groove formed in a surface, facing the second rotor, of the first rotor, a driven side cam groove formed in a surface, facing the first rotor, of the second rotor, a ball that is fitted in the driving side cam groove and the driven side cam groove to be able to roll, and is interposed between the first rotor and the second rotor, and a spring that biases the first rotor toward the second rotor, each of the driving side cam groove and the driven side cam groove including a fitting portion that includes a shape matching an outer shape of part of the ball and prevents a delay of a phase of rotation of the second rotor from a phase of rotation of the first rotor, and an inclined cam portion that causes the ball to roll and move the first rotor in a direction apart from the second rotor when the phase of rotation of the second rotor advances from the phase of rotation of the first rotor, and the first rotor including a press portion that presses the first pressure plate in a direction in which the first friction disc and the second friction disc move apart from each other when the first rotor moves along with rolling of the ball, and the driving side cam groove including a plurality of types of cam grooves different in an inclination angle of the inclined cam portion, and the driven side cam groove including a plurality of types of cam grooves different in the inclination angle of the inclined cam portion.

### Effect of the Invention

When back torque is transmitted to the friction clutch according to the present invention, the phase of rotation of the second rotor advances from that of the first rotor. In this case, the ball of the back torque limiter mechanism moves from the fitting portions of the driving and driven side cam grooves to the inclined cam portions and roll along the inclined cam portions by a moving amount corresponding to the magnitude of the back torque. As the ball moves along the inclined cam portions, the first rotor moves in a direction apart from the second rotor, decreasing the torque transmitted in the friction clutch mechanism when the press portion of the first rotor presses the first pressure plate. As a result, the friction clutch mechanism slides to cut off the back torque transmitted from the friction clutch to the upstream side of the power transmission path.

The working resistance is low because the back torque limiter mechanism adopts a ball cam working mechanism. The present invention can therefore provide a friction clutch capable of maintaining long a half-clutch state in which the clutch slides, because back torque of a smaller value can be cut off.

### Brief Description of Drawings

Fig. 1 is a longitudinal sectional view of a friction clutch according to an embodiment of the present invention;
Fig. 2 is a front view of a slide plate;
Fig. 3 is a sectional view taken along a line III - III in Fig. 2;
Fig. 4 is a rear view of a center plate;
Fig. 5 is a sectional view taken along a line V - V in Fig. 4;
Fig. 6 is an exploded perspective view of a first rotor;
Fig. 7 is an exploded perspective view of a second rotor;
Fig. 8 is a schematic view for explaining a power torque transmission path; and
Fig. 9 is a schematic view for explaining a back torque transmission path.

### Best Mode for Carrying Out the Invention

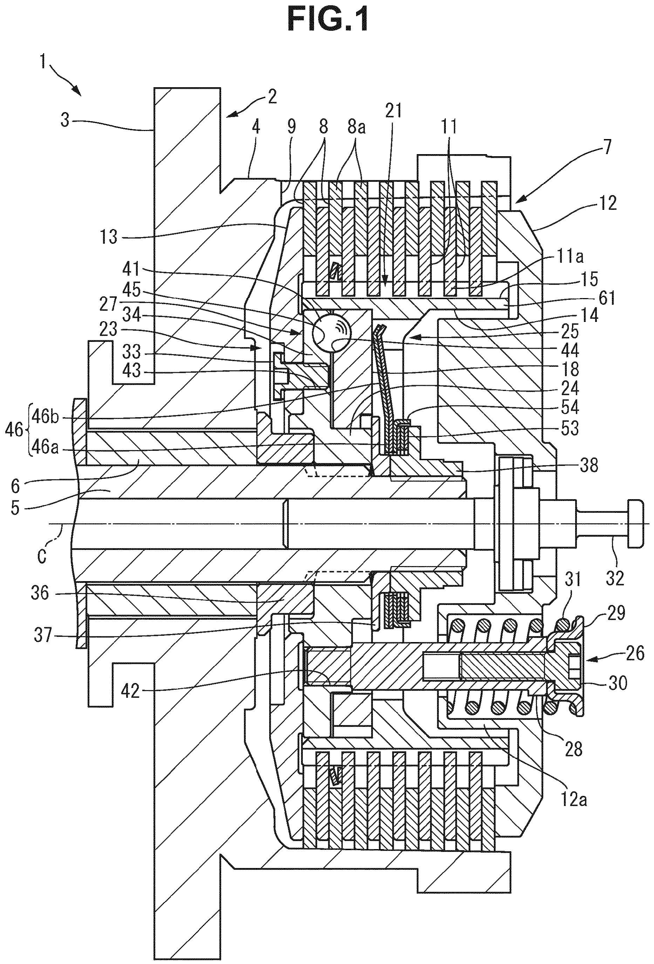

An embodiment of a friction clutch according to the present invention will be described in detail below with reference to Figs. 1 to 9.

A friction clutch 1 shown in Fig. 1 can be provided on, for example, a power transmission path between the engine and transmission of a motorcycle (not shown). An input member 2 at the most outside position in Fig. 1 receives power from a power source (not shown) and rotates. Although the input member 2 shown in Fig. 1 is illustrated as one component for easy understanding of the structure, it includes an input gear 3 that meshes with a drive gear (not shown) on the power source side, and a cylindrical clutch case 4 connected to the input gear 3 via a torque damper (not shown).

The input member 2 is rotatably supported via a bearing 6 by an output shaft 5 positioned at an axial portion. The output shaft 5 receives power from the friction clutch 1 and rotates. When the friction clutch 1 is mounted in a motorcycle, the output shaft 5 is formed from the input shaft of a transmission. The output shaft 5 is equivalent to an "output member" in the present invention.

The clutch case 4 holds a plurality of first friction discs 8 included in a friction clutch mechanism 7. Each first friction disc 8 is formed into an annular disc shape and accommodated in the clutch case 4 in a state in which a projection 8a provided at the outer peripheral portion of the first friction disc 8 is engaged with a corresponding notched groove 9 of the clutch case 4. The notched groove 9 extends in a direction parallel to a rotation axis C of the clutch case 4 and makes the inside and outside of the clutch case 4 communicate with each other. The projections 8a of the first friction disc 8 and the notched grooves 9 of the clutch case 4 are provided at a plurality of positions where the clutch case 4 is divided in the circumferential direction.

The first friction disc 8 rotates together with the clutch case 4 in a state in which it can freely move in the longitudinal direction (direction parallel to the rotation axis C of the clutch case 4) of the notched groove 9 with respect to the clutch case 4. The direction in which the first friction disc 8 moves freely will be simply called a "clutch working direction" for convenience. A side of the clutch case 4 opposite to the input gear 3 in the clutch working direction will be called "one side in the clutch working direction" (right side in Fig. 1 and a direction in which the first friction disc 8 moves apart from the input gear 3). The opposite side will be called "the other side in the clutch working direction" (left side in Fig. 1 and a direction in which the first friction disc 8 comes close to the input gear 3).

The friction clutch mechanism 7 is interposed between the input member 2 and a first rotor 21. The friction clutch mechanism 7 includes the above-described first friction discs 8, a plurality of second friction discs 11 each inserted between the two adjacent first friction discs 8, and a first pressure plate 12 and a second pressure plate 13 that sandwich the first and second friction discs 8 and 11 from two sides in the clutch working direction.

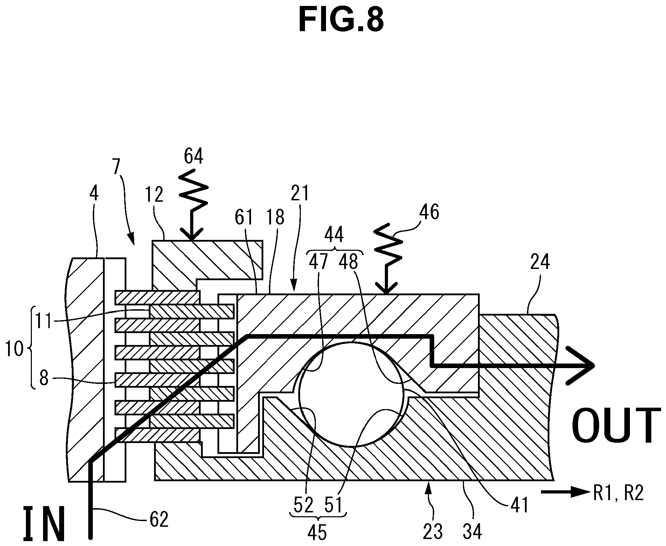

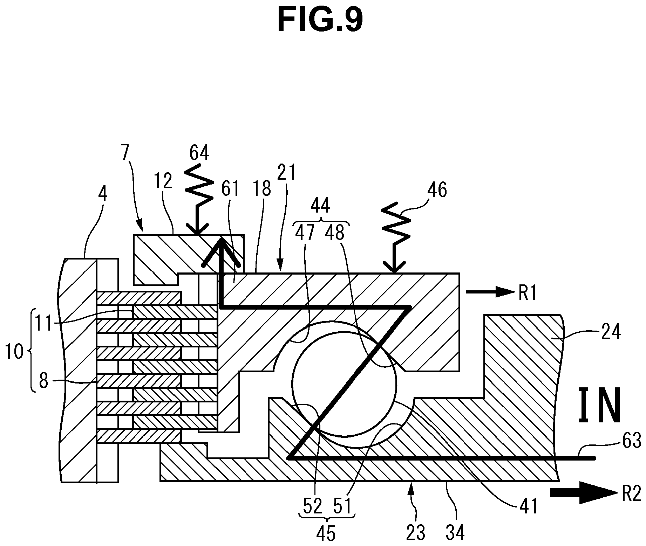

Each second friction disc 11 is formed into an annular disc shape and accommodated in the clutch case 4 in a state in which a projection 11a provided inward at the inner peripheral portion of the second friction disc 11 is engaged with a corresponding spline groove 15 of an inner hub 14 of the first rotor 21 (to be described later). The first friction discs 8 and the second friction discs 11 move in the clutch working direction to come into contact with each other and move apart from each other. The first friction discs 8 and the second friction discs 11 constitute a friction member 10 (see Figs. 8 and 9).

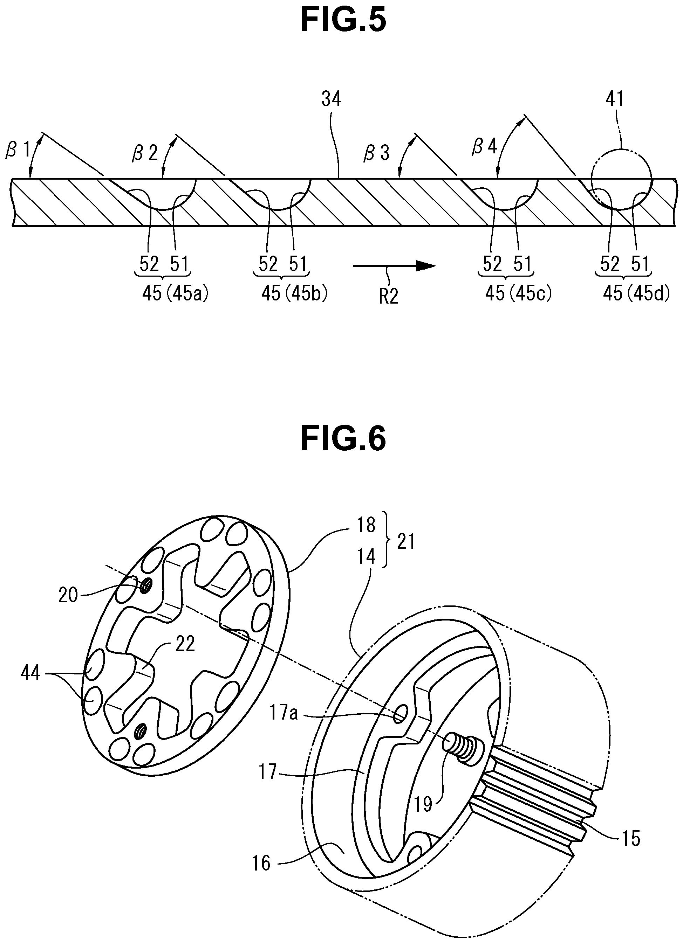

The first rotor 21 includes the above-described inner hub 14 and a slide plate 18. As shown in Fig. 6, the inner hub 14 includes a cylindrical portion 16 having the above-mentioned spline grooves 15, and an inner flange portion 17 extending inward from the cylindrical portion 16 in the radial direction. The projections 11a of the second friction disc 11 and the spline grooves 15 of the inner hub 14 are provided at a plurality of positions where the cylindrical portion 16 is divided at a predetermined interval in the circumferential direction. A slide plate 18 having an annual disc shape is attached to the inner flange portion 17 of the inner hub 14 by a plurality of mounting bolts 19. Each mounting bolt 19 is threadably fixed to a corresponding threaded hole 20 of the slide plate 18 via a through hole 17a of the inner flange 17.

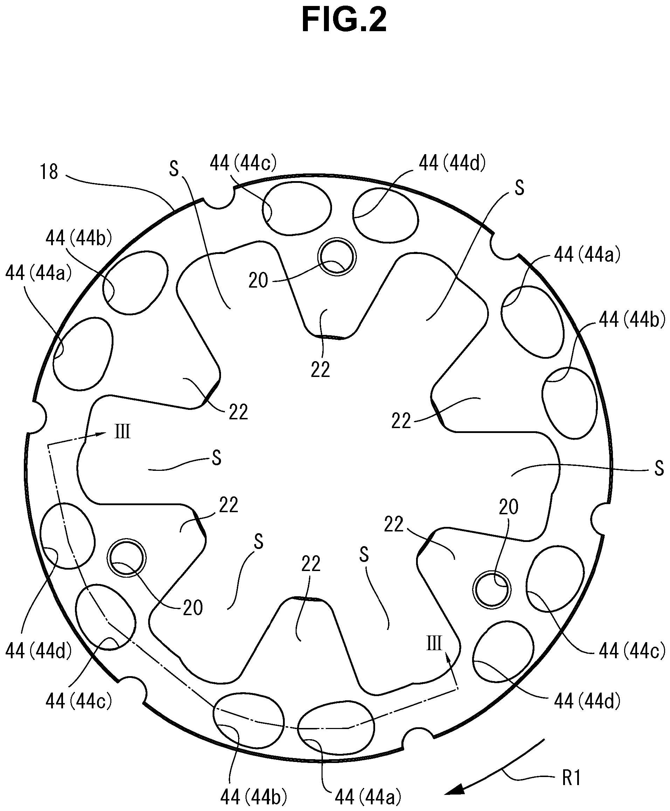

As shown in Fig. 2, a plurality of projecting pieces 22 extending inward in the radial direction are integrally formed at the inner circumferential portion of the slide plate 18. A space S is formed between the adjacent projecting pieces 22 to avoid interference with another component. An end of the projecting piece 22 on the projection side is movably supported by a center boss 24 of a second rotor 23 (see Fig. 1: to be described later). "Movably" means that the slide plate 18 can freely rotate with respect to the center boss 24 and freely move in the clutch working direction. The first rotor 21 formed from the inner hub 14 and the slide plate 18 is constituted so that it can freely rotate with respect to the second rotor 23 and freely move in the clutch working direction.

Power transmitted from the input member 2 to the first rotor 21 via the friction clutch 1 is transmitted from the first rotor 21 to the second rotor 23 via a back torque limiter mechanism 25 (to be described later).

In Fig. 1, the first pressure plate 12 has a function of pressing the first and second friction discs 8 and 11 from one side toward the other side in the clutch working direction. That is, the first pressure plate 12 presses the first and second friction discs 8 and 11 in a direction in which the adjacent first and second friction discs 8 and 11 come close to each other. The first pressure plate 12 is formed into a disc shape and positioned on the same axis as that of the clutch case 4. The first pressure plate 12 is supported by a center plate 27 of the second rotor 23 (to be described later) via a plurality of spring mechanisms 26 illustrated on a lower side in Fig. 1.

Each spring mechanism 26 includes a cylindrical support member 28 threadably fixed to the center plate 27. The cylindrical support member 28 extends from the center plate 27 to one side in the clutch working direction through the above-mentioned space S of the slide plate 18, and passes through a recess 12a of the first pressure plate 12. The recesses 12a and the cylindrical support members 28 are provided at a plurality of positions where the first pressure plate 12 is divided in the circumferential direction. A support washer 29 is fixed to the distal end of each cylindrical support member 28 by a set bolt 30. A compression coil spring 31 is compressed and inserted between the support washer 29 and the bottom of the recess 12a. The cylindrical support member 28 passes the center of the compression coil spring 31. The first pressure plate 12 presses the first and second friction discs 8 and 11 from one side to the other side in the clutch working direction by the spring force of the compression coil spring 31.

A release rod 32 is engaged with the axial portion of the first pressure plate 12. The release rod 32 is used to disconnect the friction clutch 1. One end of the release rod 32 is movably fitted in the hollow portion of the output shaft 5, and the other end is connected to a clutch operation mechanism (not shown). When disconnecting the friction clutch 1, the clutch operation mechanism pulls the release rod 32 toward one side in the clutch working direction against the spring force of the compression coil spring 31.

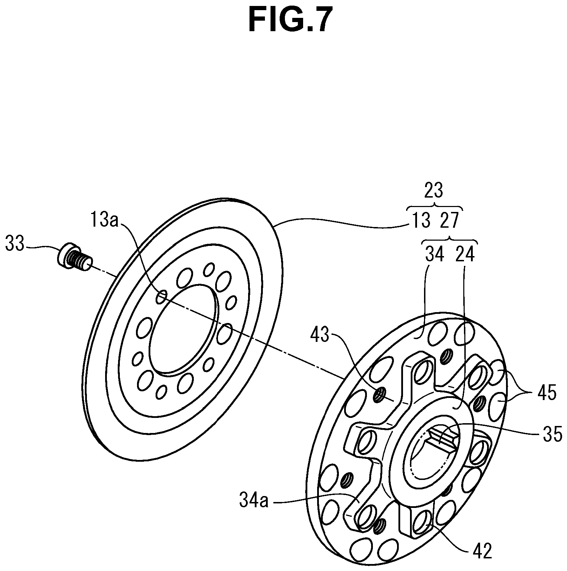

The second pressure plate 13 receives the press force of the first pressure plate 12 and is formed into an annular disc shape, as shown in Fig. 7. The second pressure plate 13 is attached to the center plate 27 by a plurality of mounting bolts 33. Each mounting bolt 33 passes a through hole 13a of the second pressure plate 13.

The center plate 27 constitutes the second rotor 23 in cooperation with the above-described second pressure plate 13, and is formed into a disc shape. The center plate 27 includes the center boss 24 at the axial portion, and an annular disc-like center flange 34 extending outside from the center boss 24 in the radial direction. The center boss 24 is formed into a cylindrical shape. Many spline grooves 35 are formed at the inner peripheral portion of the center boss 24 and connected to the output shaft 5 by a spline.

As shown in Fig. 1, the center boss 24 is mounted on the output shaft 5 in a state in which a flanged collar 36 is inserted between the center boss 24 and the bearing 6 supporting the input member 2. The projecting portion of the output shaft 5 projects from the center boss 24 toward one side in the clutch working direction. The projecting portion is fitted in a stiffening plate 37 for retaining the center boss 24, and a nut member 38 is threadably fixed to the projecting portion to fix the stiffening plate 37 to the output shaft 5. The second rotor 23 including the center boss 24 is fixed to the output shaft 5 and rotates together with the output shaft 5 in a state in which movement in the clutch working direction with respect to the output shaft 5 is prevented.

The slide plate 18 is movably mounted on the outer surface of the center boss 24. The center flange 34 of the center plate 27 is aligned with the slide plate 18 in the clutch working direction and faces it. The center flange 34 and the slide plate 18 are connected via balls 41. The balls 41 are included in the back torque limiter mechanism 25, details of which will be described later.

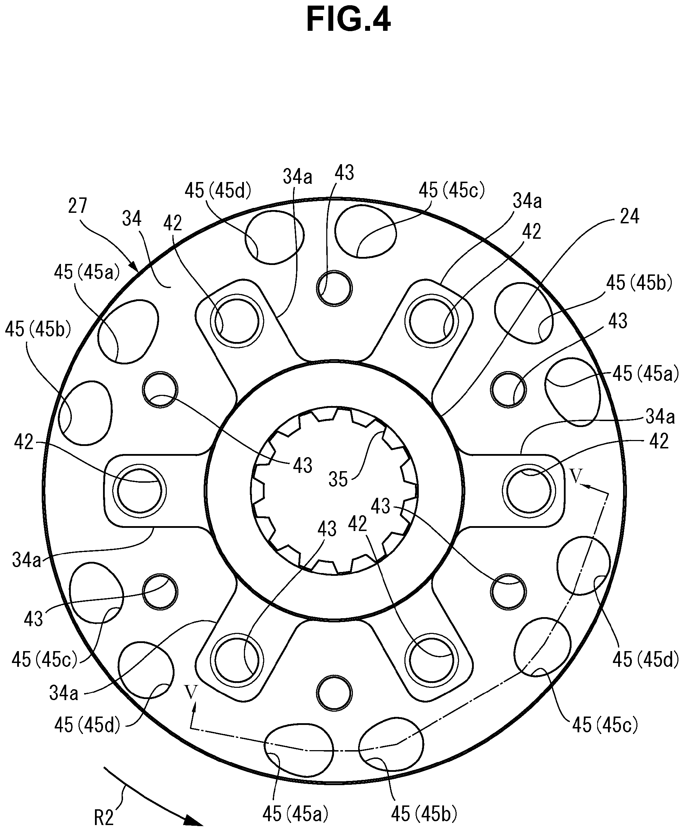

The center flange 34 has threaded holes 42 in which the above-mentioned cylindrical support members 28 are threadably fixed, and threaded holes 43 in which the mounting bolts 33 for attaching the second pressure plate 13. As shown in Fig. 4, the threaded holes 42 and 43 of two types are provided to alternately align at a plurality of positions where the center flange 34 is divided in the circumferential direction. Each threaded hole 42 for the cylindrical support member 28 is formed through a reinforcing rib 34a provided on the center flange 34.

The back torque limiter mechanism 25 is interposed between the first rotor 21 and the second rotor 23. The back torque limiter mechanism 25 is constituted using a ball cam working mechanism. As shown in Fig. 1, the back torque limiter mechanism 25 includes driving side cam grooves 44 formed in the slide plate 18, driven side cam grooves 45 formed in the center flange 34, the balls 41 fitted in the driving and driven side cam grooves 44 and 45, and back torque adjustment spring members 46 arranged on one side in the clutch working direction with respect to the slide plate 18.

The driving side cam grooves 44 are formed at an end of the slide plate 18 on the other side in the clutch working direction and on a surface facing the center flange 34. In this embodiment, as shown in Fig. 2, the driving side cam grooves 44 are formed in the circumferential direction at the outer peripheral portion of the slide plate 18.

Each driving side cam groove 44 is formed into an almost oval shape extending in the rotational direction of the slide plate 18 when viewed from the axial direction of the slide plate 18. The rotational direction of the slide plate 18 when transmitting power from the friction clutch 1 to the output shaft 5 is the clockwise direction as indicated by an arrow R1 in Fig. 2.

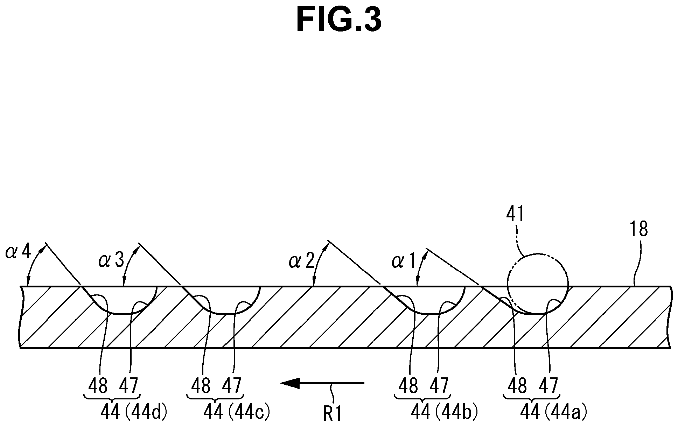

Each driving side cam groove 44 includes a first fitting portion 47 and a first inclined cam portion 48. The first fitting portion 47 is a rear portion of the slide plate 18 in the rotational direction R1, and the first inclined cam portion 48 is a front portion. The driving side cam groove 44 has a plane shape in which the radius of curvature relatively increases at the first fitting portion 47 and relatively decreases at the first inclined cam portion 48. The first fitting portion 47 has a shape matching the outer shape of part of the ball 41. Since the ball 41 is spherical, the first fitting portion 47 has the shape of a quarter of the sphere, as shown in Fig. 3. The first inclined cam portion 48 has a slope that inclines to shallow gradually toward the front side of the slide plate 18 in the rotational direction R1. The driving side cam groove 44 can be formed by cutting or grinding the slide plate 18.

In this embodiment, the driving side cam grooves 44 of four types different in the inclination angle of the first inclined cam portion 48 are formed in the slide plate 18. That is, a first driving side cam groove 44a having an inclination angle α1°, a second driving side cam groove 44b having an inclination angle α2°, a third driving side cam groove 44c having an inclination angle α3°, and a fourth driving side cam groove 44d having an inclination angle α4° are formed as shown in Fig. 3. The inclination angle α2° is larger than the inclination angle α1°, the inclination angle α3° is larger than the inclination angle α2°, and the inclination angle α4° is larger than the inclination angle α3°. That is, the sizes of the inclination angles of the first inclined cam portions 48 are α1° < α2° < α3° < α4°. As shown in Fig. 2, three sets of first to fourth driving side cam grooves 44a to 44d are provided at three portions of the slide plate 18 in the circumferential direction.

As shown in Fig. 1, the driven side cam grooves 45 are formed at an end of the center flange 34 on one side in the clutch working direction and on a surface facing the slide plate 18. In this embodiment, as shown in Fig. 4, the driven side cam grooves 45 are formed in the circumferential direction at the outer peripheral portion of the center flange 34.

Each driven side cam groove 45 is formed into an almost oval shape extending in a direction opposite to a rotational direction R2 of the center plate 27 when viewed from the axial direction of the center plate 27. The rotational direction of the center plate 27 when transmitting power from the friction clutch 1 to the output shaft 5 is the counterclockwise direction as indicated by the arrow R2 in Fig. 4.

Each driven side cam groove 45 includes a second fitting portion 51 and a second inclined cam portion 52. The second fitting portion 51 is a front portion of the center plate 27 in the rotational direction R2, and the second inclined cam portion 52 is a rear portion. The driven side cam groove 45 has a plane shape in which the radius of curvature relatively increases at the second fitting portion 51 and relatively decreases at the second inclined cam portion 52. The second fitting portion 51 has a shape matching the outer shape of part of the ball 41. Since the ball 41 is spherical, the second fitting portion 51 has the shape of a quarter of the sphere, as shown in Fig. 4. The second inclined cam portion 52 has a slope that inclines to shallow gradually toward the rear side of the center plate 27 in the rotational direction R2. The driven side cam groove 45 can be formed by cutting or grinding the center flange 34.

In this embodiment, the driven side cam grooves 45 of four types different in the inclination angle of the second inclined cam portion 52 are formed on the center flange 34. That is, a first driven side cam groove 45a having an inclination angle β1°, a second driven side cam groove 45b having an inclination angle β2°, a third driven side cam groove 45c having an inclination angle β3°, and a fourth driven side cam groove 45d having an inclination angle β4° are formed as shown in Fig. 5. The inclination angle β2° is larger than the inclination angle β1°, the inclination angle β3° is larger than the inclination angle β2°, and the inclination angle β4° is larger than the inclination angle β3°. That is, the sizes of the inclination angles of the second inclined cam portions 52 are β1° < β2° < β3° < β4°.

As shown in Fig. 4, three sets of first to fourth driven side cam grooves 45a to 45d are provided at three portions of the center flange 34 in the circumferential direction. The positions of the first to fourth driven side cam grooves 45a to 45d correspond to those of the above-described first to fourth driving side cam grooves 44a to 44d. That is, the first driving side cam groove 44a is formed at a position where it faces the first driven side cam groove 45a, and the second driving side cam groove 44b is formed at a position where it faces the second driven side cam groove 45b. The third driving side cam groove 44c is formed at a position where it faces the third driven side cam groove 45c, and the fourth driving side cam groove 44d is formed at a position where it faces the fourth driven side cam groove 45d. More specifically, the first fitting portion 47 of the driving side cam groove 44 faces the second fitting portion 51 of the driven side cam groove 45.

Each ball 41 is inserted between the driving and driven side cam grooves 44 and 45 in which the inclination angles of the first and second inclined cam portions 48 and 52 are equal, out of the driving and driven side cam grooves 44 and 45 each of four types. That is, three balls 41 are inserted between the driving and driven side cam grooves 44 and 45 at 12 portions. The three balls 41 are fitted in the driving and driven side cam grooves 44 and 45 so that they can roll, and are interposed between the first and second rotors 21 and 23.

The first inclined cam portion 48 of the driving side cam groove 44 and the second inclined cam portion 52 of the driven side cam groove 45 constitute a ball cam working mechanism in cooperation with the balls 41. The phase of rotation of the second rotor 23 including the center flange 34 advances from that of the first rotor 21 including the slide plate 18. Then, the balls 41 roll in a direction in which they move apart from the first and second fitting portions 47 and 51, and move the first rotor 21 to one side in the clutch working direction with respect to the second rotor 23, that is, in a direction in which the first rotor 21 moves apart from the second rotor 23.

In Fig. 1, each back torque adjustment spring member 46 biases the first rotor 21 toward the second rotor 23 (the slide plate 18 toward the center flange 34), and is formed from a leaf spring. The spring member 46 has an annular base 46a positioned on the same axis as that of the output shaft 5, and a press portion 46b that extends outward from the base 46a in the radial direction, is inclined toward the other side in the clutch working direction, contacts the slide plate 18, and presses the slide plate 18 toward the center flange 34.

The base 46a is supported by the output shaft 5 in a state in which a position of the base 46a in the clutch working direction can be changed. The base 46a is positioned in the clutch working direction by the nut member 38, a plurality of plate spacers 53, and a cup centering spacer 54. The position of the spring member 46 in the clutch working direction can be changed by changing the number of plate spacers 53. The spring force of the press portion 46b pressing the slide plate 18 is increased by increasing the number of plate spacers 53 and decreased by decreasing the number of plate spacers 53. The slide plate 18 is pressed by the press portion 46b and held in a state in which the balls 41 are sandwiched between the slide plate 18 and the center flange 34.

Next, the operation of the friction clutch 1 having this structure will be described with reference to Figs. 8 and 9. In Figs. 8 and 9, the same reference numerals denote the same parts described with reference to Figs. 1 to 7. Reference numeral 62 denotes a power transmission path; and 63, a back torque transmission path. Reference numeral 64 denotes a spring force (compression force) of the compression coil spring 31 of the spring mechanism 26 that is applied to the first pressure plate 12.

When power is transmitted from the power source to the first rotor 21 via the friction clutch mechanism 7, the first fitting portion 47 of the driving side cam groove 44 presses the ball 41 to the front side in the rotational direction R1, as shown in Fig. 8. Since the ball 41 is fitted in the second fitting portion 51 of the driven side cam groove 45 at this time, it presses the center flange 34 to the front side in the rotational direction R2 so that the phase of rotation does not delay from the slide plate 18. In other words, the first and second fitting portions 47 and 51 prevent a delay of the phase of rotation of the second rotor 23 including the center flange 34 from the phase of rotation of the first rotor 21 including the slide plate 18. Thus, the power is transmitted from the first rotor 21 to the second rotor 23 via the back torque limiter mechanism 25.

If the power transmitted from the power source to the clutch case 4 decreases while the clutch case 4 and the output shaft 5 rotate together, back torque is transmitted from the output shaft 5 side to the friction clutch 1. In this case, as shown in Fig. 9, the phase of rotation of the second rotor 23 advances from that of the first rotor 21. When the phase of rotation of the second rotor 23 advances in this way, the ball 41 of the back torque limiter mechanism 25 moves from the first and second fitting portions 47 and 51 of the driving and driven side cam grooves 44 and 45 to the first and second inclined cam portions 48 and 52, and rolls in the first and second inclined cam portions 48 and 52 by a moving amount corresponding to the magnitude of the back torque. When the ball 41 moves in the first and second inclined cam portions 48 and 52 in this manner, the first rotor 21 moves to one side in the clutch working direction against the spring force of the spring member 46.

The inner hub 14, which is part of the first rotor 21, is configured to bring an end 61 on one side in the clutch working direction into contact with the first pressure plate 12 when the ball 41 rolls by a predetermined moving distance. The end 61 is equivalent to a "press portion" in the present invention. When the back torque is transmitted, the end 61 of the inner hub 14 presses the first pressure plate 12 to one side (direction in which the first friction disc 8 and the second friction disc 11 move apart from each other) in the clutch working direction. This reduces a press force by which the first pressure plate 12 presses the first and second friction discs 8 and 11 of the friction clutch mechanism 7 to the other side in the clutch working direction. As a result, the torque transmitted in the friction clutch mechanism 7 decreases, the friction clutch 1 slides, and the back torque transmitted from the friction clutch 1 to the upstream side of the power transmission path 62 is cut off.

The magnitude of the back torque (regulation value of the back torque) at the start of sliding the friction clutch mechanism 7 can be changed by changing the ball 41 into the driving and driven side cam grooves 44 and 45 having different inclination angles of the first and second inclined cam portions 48 and 52. As the inclination angles of the first and second inclined cam portions 48 and 52 become larger, the regulation value of the back torque becomes larger because it becomes more difficult to move the first rotor 21 to one side in the clutch working direction.

The back torque limiter mechanism 25 according to this embodiment uses the ball cam working mechanism to convert rotation into movement in the axial direction, so the working resistance is lower than that of a cam mechanism of a structure in which a cam follower incapable of rotation slides along the cam surface. A low working resistance makes it possible to cut off smaller back torque. In other words, a half-clutch state in which the friction clutch 1 slides can be maintained long.

In a friction clutch mounted in a racing motorcycle, the regulation value of the back torque is sometimes changed in accordance with the course situation of a circuit, the characteristics of a vehicle, and the favor of a driver. The regulation value of the back torque is the magnitude of back torque at which the back torque limiter mechanism starts operating. In the friction clutch disclosed in patent literature 1, the regulation value of the back torque can be changed by changing the inclination angles of the backward torque transmission cam surfaces of the first and second rings. However, the inclination angles of the cam surfaces are unique to the first and second rings. To change the regulation value of the back torque, a plurality of types of first and second rings need to be prepared in advance and stored for replacement.

To the contrary, the first rotor 21 according to this embodiment has a plurality of types of driving side cam grooves 44 different in the inclination angle of the first inclined cam portion 48. The second rotor 23 has a plurality of types of driven side cam grooves 45 different in the inclination angle of the second inclined cam portion 52. In the friction clutch 1 according to this embodiment, the regulation value of the back torque can be changed by changing the driving and driven side cam grooves 44 and 45 to which the ball 41 is inserted. Therefore, the regulation value of the back torque can be changed easily without changing components.

Each spring member 46 of the back torque limiter mechanism 25 according to this embodiment includes the annular base 46a positioned on the same axis as that of the output shaft 5, and the press portion 46b that extends outward from the base 46a in the radial direction and is inclined toward the other side in the clutch working direction. The base 46a is supported by the output shaft 5 in a state in which a position of the base 46a in the clutch working direction can be changed. In this embodiment, the two spring members 46 are used in a state in which they overlap each other in the axial direction of the output shaft 5, as shown in Fig. 1.

A press force by which the slide plate 18 is pressed toward the center flange 34 corresponds to the sum of the spring forces of the spring members 46. When decreasing the press force, it can be adjusted by decreasing the number of spring members 46 to one at minimum. In this case, the plate spacers 53 are added by the decrease in the spring members 46. When increasing the press force, it can be adjusted by increasing the number of spring members 46 as long as they can be accommodated between the stiffening plate 37 and the nut member 38. In this case, the plate spacers 53 are reduced by the increase in the spring members 46.

Since the press force by which the slide plate 18 is pressed toward the center flange 34 is changed by changing the number of spring members 46, a resistance when the first rotor 21 moves to one side in the clutch working direction, that is, the regulation value of the back torque can be changed. This embodiment can provide the friction clutch 1 capable of finely adjusting the magnitude of the back torque transmitted from the friction clutch 1 to the upstream side of the power transmission path 62.

A motorcycle in which the friction clutch 1 according to this embodiment is assembled between the engine and the transmission allows a driver to adjust the strength and generation time of the braking force of the engine brake, the timing and strength of convergence, and the like as he wants, in accordance with the driving environment and situation (for example, course, weather, and parts used). Since the driver can adjust the motorcycle to have engine brake characteristics he wants, the behavior can be predicted easily and riding that maximizes the performance of the vehicle becomes possible.

### Explanation of the Reference Numerals and Signs

1...friction clutch, 2...input member, 5...output shaft (output member), 7...friction clutch mechanism, 8...first friction disc, 10...friction member, 11...second friction disc, 12...first pressure plate, 13...second pressure plate, 21...first rotor, 23...second rotor, 25...back torque limiter mechanism, 41...ball, 44...driving side cam groove, 45...driven side cam groove, 46...spring member, 46a...base, 46b...press portion, 47...first fitting portion, 48...first inclined cam portion, 51...second fitting portion, 52...second inclined cam portion, 61...end (press portion)

## Claims

1. A friction clutch (1) comprising:
an input member (2) that receives power from a power source and rotates;
a first rotor (21) configured to move in a clutch working direction parallel to a rotation axis of the input member (2);
a friction clutch mechanism (7) interposed between the input member (2) and the first rotor (21);
a second rotor (23) that rotates together with an output member (5); and
a back torque limiter mechanism (25) interposed between the first rotor (21) and the second rotor (23),
the friction clutch mechanism (7) including:
a friction member (10) including a first friction disc (8) and a second friction disc (11) that are provided on the input member (2) and the first rotor (21), respectively, and move in the clutch working direction to come into contact with each other and move apart from each other;
a first pressure plate (12) that presses the friction member (10) in a direction in which the first friction disc (8) and the second friction disc (11) come close to each other; and
a second pressure plate (13) that sandwiches the friction member (10) with the first pressure plate (12),
the back torque limiter mechanism (25) including:
a driving side cam groove (44) formed in a surface, facing the second rotor (23), of the first rotor (21);
a driven side cam groove (45) formed in a surface, facing the first rotor (21), of the second rotor (23);
a ball (41) that is fitted in the driving side cam groove (44) and the driven side cam groove (45) to be able to roll, is are interposed between the first rotor (21) and the second rotor (23); and
a spring (46) that biases the first rotor (21) toward the second rotor (23),
each of the driving side cam groove (44) and the driven side cam groove (45) including:
a fitting portion (47, 51) that includes a shape matching an outer shape of part of the ball (41) and prevents a delay of a phase of rotation of the second rotor (23) from a phase of rotation of the first rotor (21); and
an inclined cam portion (48, 52) that causes the ball (41) to roll and move the first rotor (21) in a direction apart from the second rotor (23) when the phase of rotation of the second rotor (23) advances from the phase of rotation of the first rotor (21),
the first rotor (21) including a press portion (61) that presses the first pressure plate (12) in a direction in which the first friction disc (8) and the second friction disc (11) move apart from each other when the first rotor (21) moves along with rolling of the ball (41) ;
**characterised by**,
the driving side cam groove (44) including a plurality of types of cam grooves (44a, 44b, 44c, 44d) different in an inclination angle of the inclined cam portion (48), and
the driven side cam groove (45) including a plurality of types of cam grooves (45a, 45b, 45c, 45d) different in the inclination angle of the inclined cam portion (52).

2. The friction clutch according (1) to claim 1, **characterized in that** the fitting portion (47) of the driving side cam groove (44) is arranged on a rear side of the driving side cam groove (44) in a rotational direction of the first rotor (21),
the inclined cam portion (48) of the driving side cam groove (44) includes a slope formed on a front side of the driving side cam groove (44) in the rotational direction of the first rotor (21),
the fitting portion (51) of the driven side cam groove (45) is arranged on a front side of the driven side cam groove (45) in a rotational direction of the second rotor (23), and
the inclined cam portion (52) of the driven side cam groove (45) includes a slope formed on a rear side of the driven side cam groove (45) in the rotational direction of the second rotor (23).

3. The friction clutch (1) according to claim 1, **characterized in that** the second pressure plate (13) is provided on the second rotor (23).

4. The friction clutch (1) according to any one of claims 1 to 3, **characterized in that** the spring (46) includes:
a base (46a) that is formed into an annular shape, is positioned on the same axis as an axis of the output member (5), and supported by the output (5) member in a state in which a position in the clutch working direction can be changed; and
a press portion (46b) that extends outward from the base (46a) in a radial direction, is inclined in the clutch working direction, and contacts the first rotor (21).

## Patentansprüche

1. Reibkupplung (1), aufweisend:
ein Eingangselement (2), welches Energie von einer Energiequelle aufnimmt und sich dreht;
einen ersten Rotor (21), welcher so konfiguriert ist, dass er sich in einer Kupplungsarbeitsrichtung parallel zu einer Drehachse des Eingangselements (2) bewegt;
einen Reibkupplungsmechanismus (7), welcher zwischen dem Eingangselement (2) und dem ersten Rotor (21) zwischengeschaltet ist;
einen zweiten Rotor (23), welcher sich zusammen mit einem Ausgangselement (5) dreht; und
einen Rückdrehmomentbegrenzungsmechanismus (25), welcher zwischen dem ersten Rotor (21) und dem zweiten Rotor (23) zwischengeschaltet ist,
wobei der Reibkupplungsmechanismus (7) aufweist:
ein Reibelement (10) mit einer ersten Reibscheibe (8) und einer zweiten Reibscheibe (11), welche an dem Eingangselement (2) bzw. dem ersten Rotor (21) vorgesehen sind und welche sich in der Kupplungsarbeitsrichtung bewegen, um miteinander in Kontakt zu kommen und sich voneinander weg zu bewegen;
eine erste Druckplatte (12), welche das Reibelement (10) in eine Richtung drückt, in welcher sich die erste Reibscheibe (8) und die zweite Reibscheibe (11) einander nähern; und
eine zweite Druckplatte (13), welche mit der ersten Druckplatte (12) das Reibelement (10) einklemmt,
wobei der Rückdrehmomentbegrenzungsmechanismus (25) aufweist:
eine antriebsseitige Nockennut (44), welche in einer dem zweiten Rotor (23) zugewandten Fläche des ersten Rotors (21) ausgebildet ist;
eine abtriebsseitige Nockennut (45), welche in einer dem ersten Rotor (21) zugewandten Fläche des zweiten Rotors (23) ausgebildet ist;
eine Kugel (41), welche in die antriebsseitige Nockenrille (44) und die abtriebsseitige Nockenrille (45) zum Wälzen eingepasst ist, und welche zwischen dem ersten Rotor (21) und dem zweiten Rotor (23) zwischengeschaltet ist; und
eine Feder (46), welche den ersten Rotor (21) in Richtung des zweiten Rotors (23) unter Vorspannung setzt,
wobei sowohl die antriebsseitige Nockennut (44) als auch die abtriebsseitige Nockennut (45) jeweils aufweist:
einen Passungsabschnitt (47, 51), welcher eine Form aufweist, die mit der Außenform eines Abschnitts der Kugel (41) übereinstimmt und eine Verzögerung einer Drehbewegung des zweiten Rotors (23) gegenüber einer Drehbewegung des ersten Rotors (21) verhindert; und
einen geneigten Nockenabschnitt (48, 52), welcher bewirkt, dass die Kugel (41) rollt und den ersten Rotor (21) in einer Richtung weg von dem zweiten Rotor (23) bewegt, wenn die Drehbewegung des zweiten Rotors (23) der Drehbewegung des ersten Rotors (21) voreilt,
wobei der erste Rotor (21) einen Druckabschnitt (61) aufweist, welcher die erste Druckplatte (12) in eine Richtung drückt, in welcher sich die erste Reibscheibe (8) und die zweite Reibscheibe (11) voneinander weg bewegen, wenn sich der erste Rotor (21) entlang der rollenden Kugel (41) bewegt,
**dadurch gekennzeichnet,**
**dass** die antriebsseitige Nockennut (44) eine Vielzahl von Ausführungen von Nockennuten (44a, 44b, 44c, 44d) aufweist, welche sich in einem Neigungswinkel des geneigten Nockenabschnitts (48) unterscheiden, und
**dass** die antriebsseitige Nockennut (45) eine Vielzahl von Ausführungen von Nockennuten (45a, 45b, 45c, 45d) aufweist, welche sich im Neigungswinkel des geneigten Nockenabschnitts (52) unterscheiden.

2. Reibkupplung (1) nach (1) Anspruch 1, **dadurch gekennzeichnet, dass** der Passungsabschnitt (47) der antriebsseitigen Nockennut (44) an einer Rückseite der antriebsseitigen Nockennut (44) in einer Drehrichtung des ersten Rotors (21) angeordnet ist,
wobei der geneigte Nockenabschnitt (48) der antriebsseitigen Nockennut (44) eine Schräge aufweist, welche auf einer Vorderseite der antriebsseitigen Nockennut (44) in der Drehrichtung des ersten Rotors (21) ausgebildet ist,
wobei der Passungsabschnitt (51) der abtriebsseitigen Nockennut (45) an einer Vorderseite der abtriebsseitigen Nockennut (45) in einer Drehrichtung des zweiten Rotors (23) angeordnet ist, und
wobei der geneigte Nockenabschnitt (52) der abtriebsseitigen Nockennut (45) eine Schräge aufweist, welche an einer Rückseite der abtriebsseitigen Nockennut (45) in der Drehrichtung des zweiten Rotors (23) ausgebildet ist.

3. Reibkupplung (1) nach Anspruch 1, **dadurch gekennzeichnet, dass** die zweite Druckplatte (13) an dem zweiten Rotor (23) bereitgestellt ist.

4. Reibkupplung (1) nach einem der Ansprüche 1 bis 3, **dadurch gekennzeichnet, dass** die Feder (46) aufweist:
eine Basis (46a), welche ringförmig ausgebildet ist, welche auf derselben Achse wie eine Achse des Abtriebelements (5) positioniert ist und welche von dem Abtrieb (5) in einem Zustand gelagert ist, in welcher eine Position in der Kupplungsarbeitsrichtung geändert werden kann; und
einen Druckabschnitt (46b), welcher sich von der Basis (46a) in einer radialen Richtung nach außen erstreckt, welcher in der Kupplungsarbeitsrichtung geneigt ist und welcher mit dem ersten Rotor (21) in Verbindung tritt.

## Revendications

1. Embrayage à friction (1) comprenant :
un élément d'entrée (2) qui reçoit du courant de la part d'une source de courant et qui tourne ;
un premier rotor (21) configuré pour se déplacer dans un sens fonctionnel de l'embrayage parallèlement à un axe de rotation de l'élément d'entrée (2) ;
un mécanisme d'embrayage à friction (7) interposé entre l'élément d'entrée (2) et le premier rotor (21) ;
un second rotor (23) qui tourne avec un élément de sortie (5) ; et
un mécanisme limiteur de contre-couple (25) interposé entre le premier rotor (21) et le second rotor (23),
le mécanisme d'embrayage à friction (7) incluant :
un élément de friction (10) incluant un premier disque de friction (8) et un second disque de friction (11) qui sont prévus sur l'élément d'entrée (2) et le premier rotor (21) respectivement, et se déplacent dans le sens fonctionnel de l'embrayage pour venir en contact l'un avec l'autre et s'écarter l'un de l'autre ;
une première plaque de pression (12) qui comprime l'élément de friction (10) dans un sens dans lequel le premier disque de friction (8) et le second disque de friction (11) se rapprochent l'un de l'autre ; et
une seconde plaque de pression (13) qui prend en sandwich l'élément de friction (10) avec la première plaque de pression (12),
le mécanisme limiteur de contre-couple (25) incluant :
une gorge de came latérale d'entraînement (44) formée dans une surface tournée vers le second rotor (23) du premier rotor en ce mieux édite (21) ;
une gorge de came latérale menée (45) formée dans une surface tournée vers le premier rotor (21) du second rotor (23) ;
une bille (41) qui est ajustée dans la gorge de came latérale d'entraînement (44) et la gorge de came latérale menée (45) pour être capable de rouler étant interposée entre le premier rotor (21) et le second rotor (23) ; et
un ressort (46) qui incline le premier rotor (21) vers le second rotor (23),
chacune parmi la gorge de came latérale d'entraînement (44) et la gorge de came latérale menée (45) incluant :
une section d'ajustement (47, 51) qui comporte une forme correspondant à une forme extérieure d'une partie de la bille (41) et empêche un retard d'une phase de rotation du second rotor (23) par rapport à une phase le de rotation du premier rotor (21) ; et
une section de came inclinée (48, 52) qui amène la bille (41) à rouler et déplace le premier rotor (21) dans un sens s'écartant du second rotor (23) lorsque la phase de rotation du second rotor (23) avance par rapport à la phase de rotation du premier rotor (21),
le premier rotor (21) incluant une section de compression (61) qui comprime la première plaque de pression (12) dans un sens dans lequel le premier disque de friction (8) et le second disque de friction (11) s'écartent l'un de l'autre lorsque le premier rotor (21) se déplace pendant le roulement de la bille (41) ;
**caractérisé en ce que**
la gorge de came latérale d'entraînement (44) inclut une pluralité de types de gorges de came (44a, 44b, 44c, 44d) différents dans un angle d'inclinaison de la section de came inclinée (48), et
la gorge de came latérale menée (45) inclut une pluralité de types de gorges de came (45a, 45b, 45c, 45d) différents dans un angle d'inclinaison de la section de came inclinée (52).

2. Embrayage à friction selon (1) de la revendication 1,
**caractérisé en ce que** la section d'ajustement (47) de la gorge de came latérale d'entraînement (44) est disposée sur une face arrière de la gorge de came latérale d'entraînement (44) dans un sens de rotation du premier rotor (21),
la section de came inclinée (48) de la gorge de came latérale d'entraînement (44) inclut une pente formée sur une face avant de la gorge de came latérale d'entraînement (44) dans le sens de rotation du premier rotor (21),
la section d'ajustement (51) de la gorge de came latérale menée (45) est disposée sur une face avant de la gorge de came latérale menée (45) dans un sens de rotation du second rotor (23), et
la section de came inclinée (52) de la gorge de came latérale menée (45) inclut une pente formée sur une face arrière de la gorge de came latérale menée (45) dans le sens de rotation du second rotor (23).

3. Embrayage à friction (1) selon la revendication, **caractérisé en ce que** la seconde plaque de pression (13) est prévue sur le second rotor (23).

4. Embrayage à friction (1) selon l'une quelconque des revendications 1 à 3, **caractérisé en ce que** le ressort (46) inclut :
une base (46a) qui est conformée en forme annulaire, est positionnée sur le même axe qu'un axe de l'élément de sortie (5), et supportée par l'élément de sortie (5) dans un état dans lequel une position dans le sens fonctionnel de l'embrayage peut être changée ; et
une section de compression (46b) qui s'étend vers l'extérieur depuis la base (46a) dans un sens radial, est inclinée dans le sens fonctionnel de l'embrayage, et vient en contact avec le premier rotor (21).
